Europäisches Patentamt

(19) European Patent Office

Office européen des brevets

(11) Publication number: **0 089 832**
**B1**

(12) **EUROPEAN PATENT SPECIFICATION**

(45) Date of publication of patent specification: **18.06.86**

(51) Int. Cl.⁴: **A 23 F 5/34** // A23F5/50

(21) Application number: **83301528.2**

(22) Date of filing: **18.03.83**

(54) Process for the preparation of soluble coffee.

(30) Priority: **23.03.82 US 360879**

(43) Date of publication of application:
**28.09.83 Bulletin 83/39**

(45) Publication of the grant of the patent:
**18.06.86 Bulletin 86/25**

(84) Designated Contracting States:
**CH DE FR GB IT LI**

(56) References cited:
**DE-A-3 211 069**
**FR-A-2 428 401**
**US-A-3 113 876**

**FOOD TECHNOLOGY, vol. 31, no. 6, June 1977, pages 32-35, Chicago, Illinois, USA H.J. RAFSON: "Odor emission control for the food industry"**

(73) Proprietor: **GENERAL FOODS CORPORATION**
**250 North Street**
**White Plains, N.Y. 10625 (US)**

(72) Inventor: **Silla, Harry**
**26 Lucille Court**
**Edison New Jersey 88820 (US)**
Inventor: **Nabulsi, Basam Emir**
**811 6th Street**
**Union City New Jersey 07087 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Technical Field

This invention relates to a process for the preparation of soluble coffee by spray drying a concentrated aqueous coffee extract obtained from roasted and ground coffee.

Work done by Huste et al., U.S. Patent No. 3,345,182, indicates that volatile retention across spray drying is improved with higher solids concentration of aqueous coffee extract. However, since it is ecnomical to operate the percolators at high drawoff factors giving high yields, a low concentration extract is produced. Therefore, a more effective method of concentrating extract is desirable. However, capturing and retaining volatile coffee flavor and aroma compounds is also essential.

Shrimpton, U.S. Patent No. 4,107,339 discloses a process in which a small percent evaporation is followed by a bulk evaporation to produce a high concentration extract. The condensate from the first evaporation is then added back to the concentrate and subsequently is spray dried.

If one assumes that all flavor compounds are important, then the process as disclosed in the aforementioned Shrimpton, U.S. Patent No. 4,107,339 would appear to have two areas that need improvement. The first area is the small percent evaporation. A larger percent evaporation could remove heavier volatiles, however the increased water load would dilute the product. Therefore, a means to separate and concentrate the volatiles before addback such as, for example, a distillation column is needed. The second area is a means of capturing the highly volatile compounds that are normally lost even during optimized operating conditions of a condenser is needed.

This invention relates to the second area and to a process for capturing and retaining non-condensable volatile coffee flavor and aroma compounds by entraining and dissolving the compounds in concentrated coffee extract. By concentrated coffee extract is meant an extract having a solids concentration of about 35 to 60%, preferably about 40 to 45%. As a processing step, the entrainment and solubilization of the non-condensable compounds allows for incorporation of desirable coffee flavor and aroma compounds from a venting gaseous stream, which are normally lost, into a product stream of coffee extract. These desirable flavor and aroma volatiles can then be retained through further processing to the finished soluble coffee product obtained by spray drying the concentrated extract. The gaseous aroma stream can be from any source of volatile aromas, e.g., the vent from a condenser, percolator vent, grinder, etc. Preferably, the volatile aromas are the non-condensed flavor and aroma compounds from a condenser.

The invention is based on the finding that highly volatile non-condensable flavor and aroma compounds may be incorporated directly into an extract just prior to spray drying.

This invention is thus designed to prevent the loss of desirable flavor and aroma volatiles during processing. In particular, in processes such as, for example, that of the aforementioned Shrimpton U.S. Patent No. 4,107,339, it solves the problem of flavor losses during extract evaporation due to incomplete condensation of highly volatile flavor and aroma compounds in the aroma condenser. It can also be used to solve the problem of losses due to poor condensation of volatile steam aromas in processes such as steam stripping of roast and ground coffee, and for collection of grinder gas aromas.

An advantage of this invention is that it involves the use of relatively low-cost equipment whereas previous equipment for gaseous aroma collectors were high-cost items such as liquid nitrogen condensers or brine-cooled wiped film vapor-liquid contactors such as a Votator. [A further advantage of this invention is its multiplicity of uses in processes where it is desirable to capture non-condensable gaseous flavor and aroma compounds for retention through to the finished product.] Although this invention is related to that disclosed in DE—A—3,211,069 this invention has the further advantage of supplementing or replacing the absorption column.

### Disclosure of the Invention

A process for the preparation of soluble coffee by spray drying a concentrated aqueous coffee extract obtained from roasted and ground coffee has now been discovered which results in capturing and retaining volatile coffee flavor and aroma compounds. The process comprising the following steps:

(a) an aqueous coffee extract is evaporated in an initial evaporation step (4 to 10%);

(b) the vapors from step (a) are passed through a chilled water condenser operating between 7° and 13°C (45° and 55°F);

(c) the extract from step (a), having passed through an initial evaporation step, is concentrated in a bulk evaporation step to a high concentration (55% solids); and

(d) the vapors which were condensed in step (b) are added back to the concentrated extract from step (c); characterised by

(e) the vapors which were not condensed in step (b), are pumped through a cooler to prevent aroma degradation, and then directly to an entraining means in the spray dryer extract feed line, the cooler removes the heat generated during vapor compression;

(f) the combined vapor condensate and extract from step (d) are passed through the point where the non-condensed aromas from step (e) are added via the entraining means; and

(g) the combined condensate, extract and non-condensed aroma stream is then immediately spray dried.

By "entraining means" is meant a device such as a venturi, jet orifice or the like, that allows for direct injection of non-condensables into a spray drier feed.

The evaporative concentration of step (a) may be carried out in a single effect evaporator such as a Centritherm or a multiple effect evaporator.

The solids concentration of the combined extract strippings and extracts of step (g) fed to the spray dryer is about 35% to 60%, preferably 40% to 45%.

Best Mode for Carrying out the Invention

This invention thus involves recovery of non-condensable volatiles, that is, volatiles in the gaseous stage not recovered by a condenser and their direct incorporation into a spray drier feed stream. To accomplish this, a venturi is incorporated in the feed pipe of a spray drier followed, if necessary, by a static mixer. Even in a pressure bearing pipe a venturi will create a localized negative pressure which will draw in the non-condensable gases and the subsequent re-application of pressure via a booster pump will dissolve these non-condensable gases. Then, following art-recognized current advanced spray drying techniques, a large portion of these volatiles will be retained across drying into the final product.

Other non-condensable volatile recovery schemes involve either lower temperatures or more sophisticated equipment. While other schemes can be devised to recover a portion of the non-condensable volatile stream, the process and the present invention will return substantially all of the non-condensable aromas to the extract stream just prior to drying.

The process has a number of additional advantages. Firstly, it avoids having to cryogenically condense desirable flavor and aroma compounds. Secondly, the overall process is free of variations in aroma addback levels due to the direct entrainment, which insures balanced rates of aroma generation during evaporation and recovery just prior to spray drying. Thirdly, damage to the desirable flavor and aroma compounds of these non-condensable does not occur due to the fact the volatiles are incorporated at low pressure and low temperature.

The system is designed to process extract at 35 to 60%, preferably 40 to 45%, solids concentration at rates adapted for continuous, steady state operation. The extract feed rate is controlled by a Vari-drive gear pump.

The venturi or jet orifice design is unique to the process of this application and the design procedure involves the selection of suitable venturi or orifice diameters to induce a negative pressure at the vena contracta for a given set of flow and extract conditions. Typical diameters used range from 2.38 mm to 7.2 mm at rates of 2 to 50 liters per minute.

The source of non-condensable aromas is a volatile stream in the gaseous stage not recovered by a chilled water condenser. Evaporative strips of 4 to 10% are passed through the condenser, with the resulting non-condensable aromas pumped directly to the venturi injection point in the spray dried feed line. The rate of coffee solids flowing through the evaporator is identical to the rate passing through the venturi.

The small evaporation and spray drying steps are integrated in such a way to produce a closed non-condensable aroma generation/addback loop. Thus, the overall process, i.e., small evaporation, bulk evaporation, condensed aroma addback, non-condensed aroma addback, and spray drying steps, are all operated continously and at steady state.

It is essential that the aromas be added before a booster pump positioned in the extract feed line and the Gaulin high pressure pump, also in the line, has a required net positive suction head of 2.5 kg/cm$^2$ (35 psi).

To supply the Gaulin high pressure pump with its required net positive suction head, a positive displacement pump is placed after the jet orifice. A pressure relief line is incorporated after the positive displacement pump to prevent extract from backing up through the feed line due to unmatched rates during startup or other mechanical malfunctions.

No other charges are made to the normal spray dryer flow system.

The direct injection system has been operated for extended periods. The spray dried powders have been analyzed and have had the following characteristic physical properties: density 0.2 g/cc, moisture 3.7%, and color units 47.

Taste evaluations of variants produced using the direct injection system have been conducted. These organoleptic tests have shown the samples with non-condensable aromas added to be smoother, more rounded, and balanced than their control samples made without non-condensable aromas added.

The overall process involves an initial evaporation step, carried out in a single effect evaporator, followed by a bulk evaporation. The condensate stream from the single effect evaporator is added to the concentrated extract after the bulk evaporation step. The stream of volatile aromas not condensed in the single effect evaporator condenser is recovered by entrainment and solubilization in concentrated extract having a solids content of 35 to 60% and a temperature of about 10° to 15°C. The volatile streams, both condensables and non-condensables, are thus combined with the concentrated extract stream before spray drying.

Approximately 4 to 10% of the extract feed to the single effect evaporator may be evaporated. A chilled water condenser is used to condense the volatile aromas stripped from the extract feed. A sealed unit pump such as a diaphragm pump, is used to compress the non-condensed aroma stream, mostly carbon dioxide, from low pressure (250 to 600 mm Hg absolute) to atmospheric pressure prior to addition at venturi. A more efficient evaporator, such as a multiple effect, can be used to perform the bulk of the evaporation.

Spray drying of the extract containing both the condensables and non-condensables is performed using high concentration extract (for example, 43% solids), high spray nozzle pressure (70.5 kg/cm², 1000 psig) and low temperature drying conditions (205°C in, 105°C out; 400°F in, 220°F out).

Flavor comments on the spray dried products produced in accordance with this invention have been described as being more well rounded, more balanced and smoother.

The following Example is given by way of illustration and not limitation. All percents are weight percents.

Example

(a) A roasted coffee extract (15% solids) from a percolator scale tank is evaporated under vacuum (250 to 600 mm Hg, absolute) in a single stage evaporator to 16% solids concentration.

(b) The vapors are condensed in a condenser operated at 7° to 13°C (45° to 55°F).

(c) The stripped coffee extract (16% solids) from step (a) is concentrated in a bulk evaporation step to 55% solids concentration.

(d) The condensed aromas from step (b) are added back to the concentrated extract from step (c).

(e) The non-condensed gaseous aromas are then pumped directly to a venturi injection point in the spray drier feed line. The combined condensate and extract are passed through the venturi where the non-condensed gaseous aromas are added.

(f) The combined condensate, extract and non-condensed aromas stream are then immediately spray dried at 56.4 to 70.5 kg/cm² (800 to 1000 psi) and at temperatures of 205°C inlet, 105°C outlet (400°F inlet, 220°F outlet).

Taste comparisons showed the product to contain significantly higher levels of coffee flavor notes predominantly described as more well rounded, more balanced and smoother. Gas chromatograms further showed that essentially all the gaseous aromas not condensed in the single effect evaporator condenser were returned to the extract prior to spray drying and 50% retained across spray drying.

Claims

1. A process for the preparation of soluble coffee by spray drying a concentrated aqueous coffee extract obtained from roasted and ground coffee, including:

(a) evaporating an aqueous coffee extract in an initial evaporation step;

(b) condensing the vapors from the initial evaporation step in a chilled water condenser;

(c) concentrating the extract from step (a) in a bulk evaporation step; and

(d) adding back the condensed vapors from step (b) to the concentrated extract from step (c); characterised by

(e) passing gaseous non-condensed flavor and aroma compounds of step (b) through an entraining means to the combined extract and condensed vapors of step (d); and

(f) spray drying the extract, condensed vapors, and flavor and aroma compounds of step (e).

2. A process as in Claim 1, characterised in that the extract of step (d) is maintained at a pressure of 2.8 to 7.0 kg/cm² (40 to 100 psig), a temperature of 10° to 15°C and a concentration of 35 to 60% solids when passed to the entraining means.

3. A process as in Claim 1 or Claim 2, characterised in that said entraining means is a venturi.

4. A process according to any one of Claims 1 to 3, characterised in that the initial evaporation step (a) is carried out in a single effect evaporator to evaporate 4 to 10% of the extract.

5. A process according to any one of Claims 1 to 4, characterised in that the rate of coffee solids passing through steps (a), (c), (d), (e) and (f) is equal with the rate of coffee solids passing through step (a) being the rate determining step.

6. A process according to any one of claims 1 to 5, characterised in that all processing steps are coordinated and integrated so as to maintain a continuous and steady state operation.

Patentansprüche

1. Verfahren zum Herstellen von löslichem Kaffee durch Sprühtrocknen eines konzentrierten Kaffee-extrakts, der aus geröstetem und gemahlenem Kaffee gewonnen worden ist, wobei

(a) in einem Vorverdampfungsschritt ein wäßriger Kaffee-extrakt verdampft wird;

(b) in einem wassergekühlten Kondensator die beim Vorverdampungsschritt gebildeten Brü en kondensiert werden;

(c) einem Hauptverdampungsschritt der im Schritt (a) behandelte Extrakt konzentriert wird; und

(d) das im Schritt (b) gewonnene Brüdenkonzentrat dem im Schritt (c) gewonnenen, konzentrierten Extrakt zugesetzt wird, dadurch gekennzeichnet, daß

(e) nichtkondensierte gasförmige Geschmacks- und Aromastoffe, die im Schritt (b) angefallen sind, in einer Mitreißeinrichtung der im Schritt (d) gewonnenen Kombination von Extrakt und Brüdenkondensat zugesetzt werden und

(f) der Extrakt, das Brükenkondensat und die Geschmacks- und Aromstoffe, die im Schritt (e) behandelt wurden, sprühgetrocknet werden.

2. Verfahren nach Anspruch 1, dadurch gekennzeichnet, daß der im Schritt (d) angefallene Extrakt bei seiner Zuführung zu der Mitreißeinrichtung unter einem Druck von 2,8 bis 7,0 kg/cm², auf einer Temperatur von 10 bis 15°C und auf einer Feststoff-Konzentration von 35 bis 60% gehalten wird.

3. Verfahren nach Anspruch 1 oder 2, dadurch gekennzeichnet, daß die Mitreißeinrichtung eine Venturidüse ist.

4. Verfahren nach einem der Ansprüche 1 bis 3, dadurch gekennzeichnet, daß der Vorverdampungsschritt (a) in einem einstufigen Verdampfer durchgeführt und dabei 4 bis 10% des Extrakts verdampft wird.

5. Verfahren nach einem der Ansprüche 1 bis 4, dadurch gekennzeichnet, daß in den Schritten (a), (c), (d), (e) und (f) Kaffeefeststoffe in derselben Menge pro Zeiteinheit behandelt werden wie in dem Schritt (a), in dem die Menge pro Zeiteinheit bestimmt wird.

6. Verfahren nach einem der Ansprüche 1 bis 5, dadurch gekennzeichnet, daß alle Behandlungsschritte so koordiniert und integriert werden, daß ein kontinuierlicher Betrieb unter stationären Bedingungen erhalten wird.

**Revendications**

1. Procédé de préparation de café soluble par séchage par pulvérisation d'un extrait de café aqueux concentré obtenue à partir de café torréfié et moulu, comportant:

(a) l'évaporation d'un extrait de café aqueux lors d'une étape d'évaporation initiale;

(b) la condensation des vapeurs provenant de l'évaporation initiale effectuée dans un condenseur à eau refroidie;

(c) la concentration de l'extrait provenant de l'étape (a) par une opération d'évaporation massive; et

(d) la réincorporation des vapeurs condensées provenant de l'étape (b) à l'extrait concentré provenant de l'étape (c); caractérisé en de que

(e) on envoie les composés de saveur et d'arôme non condensés gazeux de l'étape (b) rejoindre à travers un moyen d'entraînement la combinaison d'extrait et de vapeurs condensées de l'étape (d); et

(f) on sèche par pulvérisation l'extrait, les vapeurs condensées et les composés de saveur et d'arôme de l'étape (e).

2. Procédé selon la revendication 1, caractérisé en ce que l'extrait de l'étape (d) est maintenu sous une pression de 2,8 à 7,0 kg/cm$^2$, à une température de 10 à 15°C et à une concentration en solides de 35 à 60% lors de son envoi au moyen d'entraînement.

3. Procédé selon la revendication 1 ou 2, caractérisé en ce que ledit moyen d'entraînement est un venturi.

4. Procédé selon l'une quelconque des revendications 1 à 3, caractérisé en ce que l'étape d'évaporation initiale (a) est effectuée dans un évaporateur à simple effet en vue de l'évaporation de 4 à 10% de l'extrait.

5. Procédé selon l'une quelconque des revendications 1 à 3, caractérisé en ce que la vitesse à laquelle les solides de café franchissent les étapes (a), (c), (d), (e) et (f) est égale à celle à laquelle ils franchissent l'étape (a) constituant l'étape de détermination de vitesse.

6. Procédé selon l'une quelconque des revendications 1 à 5, caractérisé en ce que toutes les étapes de traitement sont coordonnées et intégrées en vue du maintien d'un fonctionnement continu et en régime permanent.